# EUROPEAN PATENT APPLICATION

(11) **EP 4 125 075 A1**
(43) Date of publication of application: **01.02.2023**
(21) Application number: 22187219.5
(22) Date of filing: 27.07.2022
(51) Int. Cl.: G09B 19/00, A61H 1/00, B25J 9/00

(54) **VIRTUAL ESCAPE, INSTRUCTOR, MAINTENANCE AND SKILLS TRAINING, PHYSICAL FITNESS, AUGMENTED STRENGTH EXOSKELETON**

(30) Priority: 29.07.2021 US 202117388216
(71) Applicant: Hamilton Sundstrand Corporation, Charlotte, NC 28217-4578 (US)
(72) Inventor: HIMMELMANN, Ashley Rose, Beloit, WI (US); STRICKLAND, Julie, Houston, TX (US)
(74) Representative: Dehns

(57) **Abstract**

An exoskeleton system includes an exoskeleton (10) securable to a user (12), and a control system (36) operably connected to the exoskeleton. The control system is configured to selectably operate the exoskeleton in two or more preconfigured operating modes. A method of operating an exoskeleton includes an exoskeleton securable to a user, and selecting one of two or more preconfigured operating modes of the exoskeleton via user input to a control system operably connected to the exoskeleton.

## Description

### BACKGROUND

Exemplary embodiments pertain to the art of exoskeletons. The shift towards deep-space, long-duration missions, and the increase in commercialization of space travel motivate the need for training, maintenance, and physical fitness technology. The reduced gravity experienced during space travel, especially during such longer duration missions causes muscle and bone atrophy in humans, which can be reduced by employing exercise. The existing technology for exercise includes a combination of several machines or apparatus with limited capability. The art would well receive a single solution for exercise, training, virtual escape, and lift assistance, solving a broad range of technical problems encountered during long duration space missions.

### BRIEF DESCRIPTION

In one aspect, an exoskeleton system includes an exoskeleton securable to a user, and a control system operably connected to the exoskeleton. The control system is configured to selectably operate the exoskeleton in two or more preconfigured operating modes.

In embodiments, one of the two or more preconfigured operating modes is an activity simulation mode wherein the controller commands the exoskeleton to provide resistance and/or feedback to the user to simulate an activity.

In embodiments, another of the two or more preconfigured operating modes is strength enhancement of the user.

In embodiments, the activity is one of walking running, swimming or cycling.

In embodiments, one of the two or more preconfigured operating modes is simulation of a low or zero gravity environment.

In embodiments, a virtual reality apparatus is configured to be worn by the user and operably connected to the control system.

In embodiments, the control system is secured to the exoskeleton.

In embodiments, the exoskeleton includes a plurality of actuators operably connected to and controlled by the control system.

In another aspect, a method of operating an exoskeleton includes an exoskeleton securable to a user, and selecting one of two or more preconfigured operating modes of the exoskeleton via user input to a control system operably connected to the exoskeleton.

In embodiments, one of the two or more preconfigured operating modes is an activity simulation mode wherein the controller commands the exoskeleton to provide resistance and/or feedback to the user to simulate an activity.

In embodiments, another of the two or more preconfigured operating modes is strength enhancement of the user.

In embodiments, the activity is one of walking running, swimming or cycling.

In embodiments, one of the two or more preconfigured operating modes is simulation of a low or zero gravity environment.

In embodiments, a virtual reality apparatus is configured to be worn by the user and is operably connected to the control system.

In embodiments, the control system is secured to the exoskeleton.

In embodiments, the exoskeleton includes a plurality of actuators operably connected to and controlled by the control system.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an exoskeleton system;
FIG. 2 is a schematic illustration of an embodiment of an exoskeleton system worn by a user;
FIG. 3 is a schematic illustration of an embodiment of securing of an exoskeleton to a user;
FIG. 4 is a schematic illustration of another embodiment of securing of an exoskeleton to a user; and
FIG. 5 is another schematic illustration of an exoskeleton system according to one or more embodiments.

### DETAILED DESCRIPTION

A detailed description of one or more embodiments of the disclosed apparatus and method are presented herein by way of exemplification and not limitation with reference to the Figures.

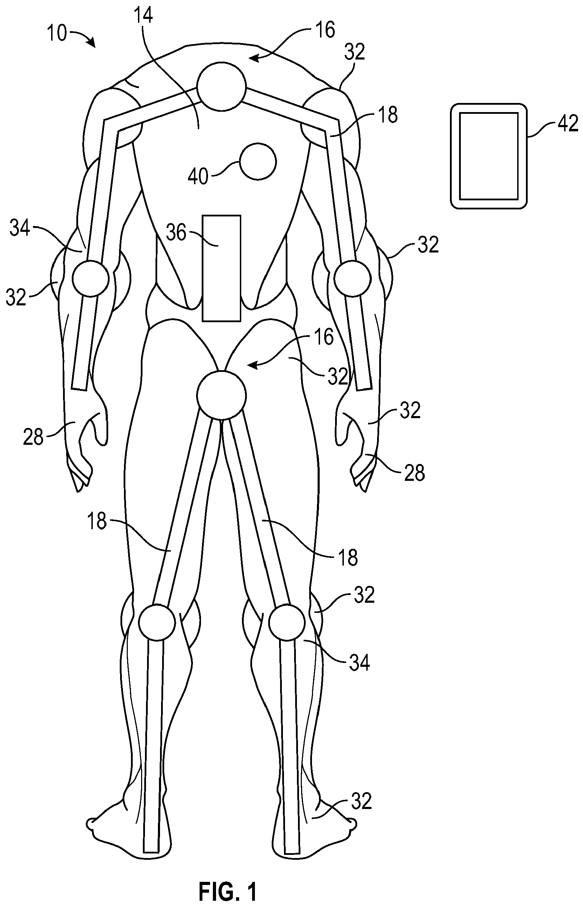

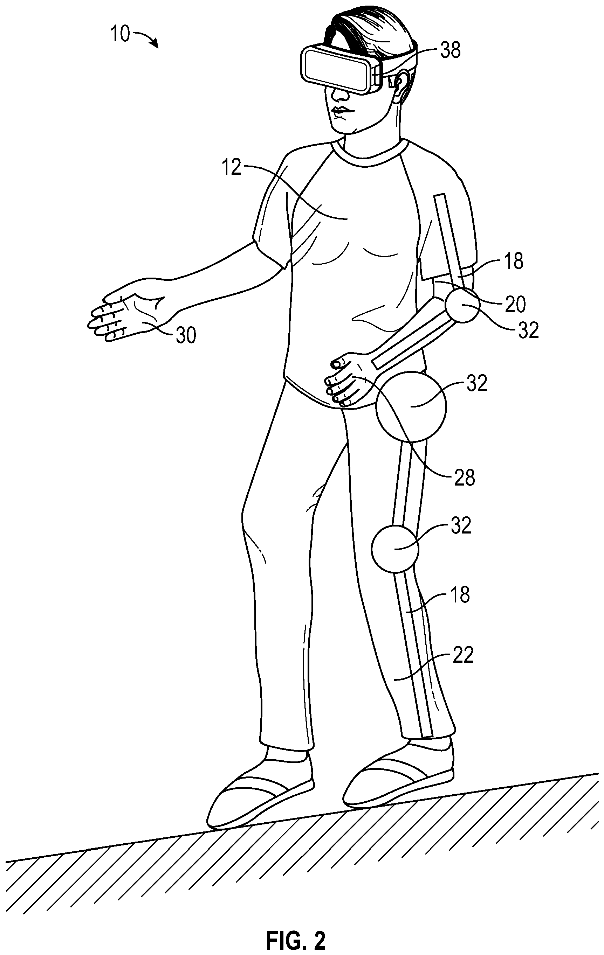

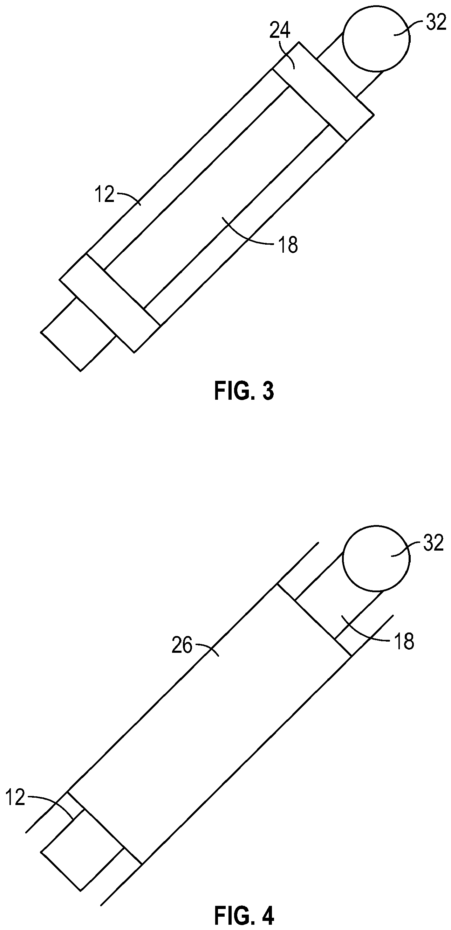

Referring now to FIGs. 1 and 2, illustrated is an embodiment of an exoskeleton 10 worn by a user 12, such as an astronaut or other user. The exoskeleton 10 includes a support portion 14, for example, a spine, secured to the user 12 via one or more attachments points 16 at a back of the user 12. A plurality of limbs 18 extend from the support portion 14 along, for example, arms 20 and/or legs 22 of the user 12. The limbs 18 are secured to the user 12 by, for example, straps 24 such as shown in FIG. 3 or sleeves 26 such as shown in FIG. 4. While straps 24 and sleeves 26 are illustrated herein, one skilled in the art will readily appreciate that other apparatus to secure the exoskeleton 10 to the user 12.

Referring again to FIGs. 1 and 2, the limbs 18 are configured to extend along the arms 20 and /or legs 22 of the user 12, and may also include hand portions 28, such as gloves, secured to one or more hands 30 of the user 12. The exoskeleton 10 includes a plurality of joints 32 in, for example, the limbs 18, that correspond to a shoulder, knee, elbow, wrist, ankle, hip or the like of the user 12. The exoskeleton 10 includes a plurality of actuators 34 to drive movement of the limbs 18 at the joints 32. In some embodiments, the actuators 34 are located at the joints 32, while in other embodiments the actuators 34 remotely from the joints 32. The actuators 34 are operably connected to a control system 36 that commands operation of the actuators 34 depending on an operational mode of the exoskeleton 10. In some embodiments, the control system 36 is wirelessly connected to the plurality of actuators 34, and further may be located on the exoskeleton 10, for example, on the support portion 14 such as shown in FIG. 1, or may be located remotely from the exoskeleton 10.

The exoskeleton 10 of the present disclosure incorporates haptic feedback, virtual reality simulation, and smart health monitoring, as discussed with reference to the modes. Exoskeleton 10 is programmed to not only reduce loads to create augmented strength for the user 12, but to create resistance against movement, simulating realistic, even Earth-like, activities. This single machine can provide a wide variety of simulated exercises and hobbies, health and exercise tracking, visually and physically realistic on-mission training exercises, augmented strength upon arrival to space destination, and a virtual escape from space to better crew moral and mental health, depending on an operational mode or program selected at the control system 36.

In a first operating mode, the exoskeleton 10 is utilized to enhance strength by commanding the actuators 34 to move the limbs 18 in cooperative movements with the user 12. For example, when the user 12 raises an arm 20 or leg 22, the actuators 34 are commanded to concurrently move the respective limbs 18 of the exoskeleton 10 in the same direction. Thus, the force of the actuators 34 is additive to the force applied by the user 12. This strength-assist mode decreases resistance for the user 12 and is useful for working in a space environment and/or on Earth.

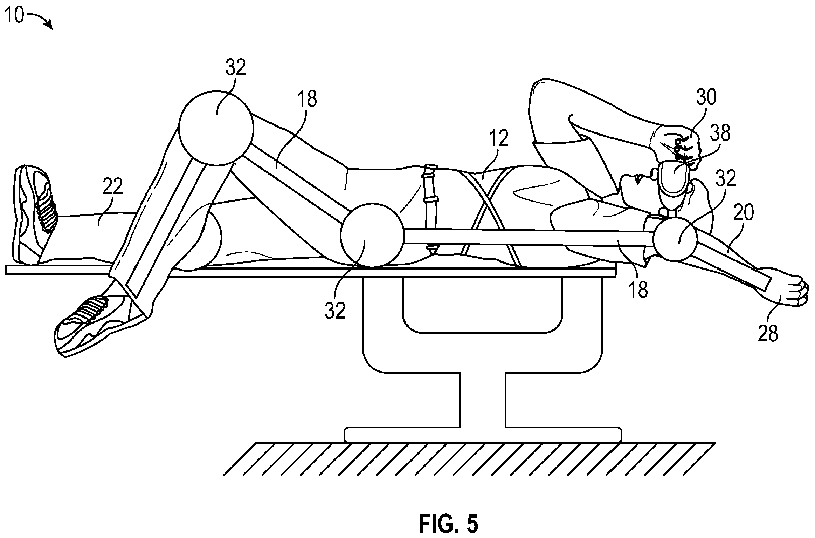

In a second operating mode, the exoskeleton 10 is utilized to simulate exercises, hobbies or other activities. For example, as shown in FIG. 5, one such activity may be swimming. The control system 36 is programmed to utilize the actuators 34 to provide resistance and/or feedback to the user 12 through the exoskeleton that simulates the effects of gravity, water, etc. when performing a swimming activity on Earth. While swimming is shown as an illustrative example in FIG. 5, one skilled in the art will readily appreciate that other activities, such as walking, running, cycling, hiking, strength training, etc. may be simulated by the exoskeleton 10 by accessing a selected program of the control system 36. Use of this mode may be particularly beneficial during extended time space missions to prevent muscle and bone deterioration and to additionally provide mental health benefits to the user 12. In some embodiments, the exoskeleton 10 is paired or otherwise connected to a device 42 such as an app on a smartphone or a nearby laptop computer, and exercises performed by the user 12 can be tracked via motion of the exoskeleton 10. One or more sensors 40 disposed at the exoskeleton may be used for smart health monitoring and may track biometric information such as heart rate, respiration, or the like.

When combined with the use of a virtual reality (VR) device 38 such as a headset and/or sound, the user may perform selected exercises or other activities in a virtual environment remote from the space environment, which has benefits in claustrophobia and./or boredom relief and other mental health benefits to the user 12.

In a third mode, the exoskeleton 10 may be utilized to simulate low or zero gravity while on Earth allowing the user 12 to train for tasks to be performed in space utilizing the exoskeleton 10. In this mode, the exoskeleton 10 provides feedback and/or strength enhancement needed to simulate the low or zero gravity environment as well as resistance and/or feedback to simulate the task the user 12 is training to perform. In any mode of operation of the exoskeleton 10, the use of the exoskeleton 10 may be combined with the use of the VR device 38 and/or sound for increasingly immersive experience for the user 12 while performing a selected activity.

Training can be completed while on the mission. That is, extravehicular activities (EVAs) are typically rehearsed prior to execution. If the user 12, an astronaut or space traveler, is on the space station, in a habitat, or in a space transport vehicle, etc., he/she can use the exoskeleton 12 to rehearse the EVA. Using the exoskeleton 12 in this manner can reduce risk and increase mission success. Furthermore, the exoskeleton 12 may be utilized to learn new skills or other activities.

The exoskeleton 10 system disclosed herein is a multi-purpose, multi-use tool, which when compared to existing tools and methods offers far increased and unique capabilities, while still realizing a reduction in complexity for the user and also a reduction in system volume.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An exoskeleton system, comprising:
an exoskeleton securable (10) to a user (12); and
a control system (36) operably connected to the exoskeleton, the control system configured to selectably operate the exoskeleton in two or more preconfigured operating modes, wherein the two or more preconfigured operating modes include a mode to provide resistance to the user and a mode to decrease resistance felt by the user.

2. The exoskeleton system of claim 1, wherein one of the two or more preconfigured operating modes is an activity simulation mode wherein the controller commands the exoskeleton to provide resistance and/or feedback to the user to simulate an activity.

3. The exoskeleton system of claim 2, wherein another of the two or more preconfigured operating modes is strength enhancement of the user.

4. The exoskeleton system of claim 2, wherein the activity is one of walking running, swimming or cycling.

5. The exoskeleton system of claim 1, wherein one of the two or more preconfigured operating modes is simulation of a low or zero gravity environment.

6. The exoskeleton system of any preceding claim, further comprising a virtual reality apparatus (38) configured to be worn by the user and operably connected to the control system.

7. The exoskeleton system of any preceding claim, wherein the control system is secured to the exoskeleton.

8. The exoskeleton system of any preceding claim, wherein the exoskeleton includes a plurality of actuators operably connected to and controlled by the control system.

9. A method of operating an exoskeleton (10) securable to a user, the method comprising:
selecting one of two or more preconfigured operating modes of the exoskeleton via user input to a control system (36) operably connected to the exoskeleton (10), wherein the two or more preconfigured operating modes include a mode to provide resistance to the user and a mode to decrease resistance felt by the user (12).

10. The method of claim 9, wherein one of the two or more preconfigured operating modes is an activity simulation mode wherein the controller commands the exoskeleton to provide resistance and/or feedback to the user to simulate an activity, or wherein one of the two or more preconfigured operating modes is simulation of a low or zero gravity environment.

11. The method of claim 10, wherein another of the two or more preconfigured operating modes is strength enhancement of the user.

12. The method of claim 10, wherein the activity is one of walking running, swimming or cycling.

13. The method of any of claims 9 to 12, further comprising a virtual reality apparatus (38) configured to be worn by the user and operably connected to the control system.

14. The method of any of claims 9 to 13, wherein the control system is secured to the exoskeleton.

15. The method of any of claims 9 to 14, wherein the exoskeleton includes a plurality of actuators operably connected to and controlled by the control system.
